# EUROPÄISCHE PATENTSCHRIFT

(11) **EP 0 895 521 B1**
(45) Veröffentlichungstag und Bekanntmachung des Hinweises auf die Patenterteilung: **22.12.1999**
(21) Anmeldenummer: 97921715.5
(22) Anmeldetag: 23.04.1997
(51) Int. Cl.: C08G 73/02

(54) **MODIFIZIERTE, FEINTEILIGE, WASSERUNLÖSLICHE POLYMERISATE VON AZIRIDINEN**
MODIFIED, FINELY DIVIDED, WATER-INSOLUBLE AZIRIDINE POLYMERS
POLYMERES D'AZIRIDINES FINEMENT DIVISES ET MODIFIEES INSOLUBLES DANS L'EAU

(30) Priorität: 23.04.1996 DE 19616120
(43) Veröffentlichungstag der Anmeldung: 10.02.1999
(73) Patentinhaber: BASF AKTIENGESELLSCHAFT, 67056 Ludwigshafen (DE)
(72) Erfinder: STEUERLE, Ulrich, D-69124 Heidelberg (DE); REUTHER, Wolfgang, D-69118 Heidelberg (DE); MEIXNER, Hubert, D-67069 Ludwigshafen (DE); EHLE, Michael, D-67071 Ludwigshafen (DE); GREINDL, Thomas, D-67098 Bad Dürkheim (DE); BETZ, Rainer, D-67071 Ludwigshafen (DE)
(86) Internationale Anmeldenummer: EP9702062
(87) Internationale Veröffentlichungsnummer: WO9740088

(56) Entgegenhaltungen:
- DE-A- 4 124 948
- US-A- 3 885 069
- PATENT ABSTRACTS OF JAPAN vol. 12, no. 252 (C-512), 15.Juli 1988 & JP 63 041532 A (NIPPON SHOKUBAI KAGAKU KOGYO) in der Anmeldung erwähnt

## Beschreibung

Die Erfindung betrifft ein Verfahren zur Herstellung von feinteiligen, wasserunlöslichen Polymerisaten von Aziridinen durch Polymerisieren von Aziridinen in Gegenwart von mindestens zwei funktionelle Gruppen enthaltenden Vernetzern in einem inerten Lösemittel, modifizierte, wasserunlösliche Polymerisate von Aziridinen und die Verwendung der feinteiligen, wasserunlöslichen Polymerisate sowie der modifizierten Polymerisate zur Immobilisierung von Wirkstoffen, als Absorptionsmittel für Aldehyde, Ketone und Säuren sowie zur Entfernung von Schwermetallionen aus Abwässern.

Aus der US-A-3 200 088 ist die Polymerisation von Alkyleniminen, vorzugsweise Ethylenimin, unter Verwendung geringer Mengen an polyhalogenierten Alkanen in Gegenwart von Spuren bestimmter Metallverbindungen oder Metalle wie insbesondere Kupfer bekannt. Die Polymerisation kann in der Masse, als Lösungspolymerisation in Wasser, wasserlöslichen Alkoholen oder Mischungen aus den genannten Lösemitteln durchgeführt werden. Die polyhalogenierten Alkane werden in Mengen von 1 bis 5 Gew.-%, bezogen auf Alkylenimin, eingesetzt. Bei Mengen oberhalb von 5 Gew.-% an halogenierten Alkanen bilden sich praktisch nicht filtrierbare unlösliche Gele von honigartiger Konsistenz.

Aus der US-A-3 885 069 ist die Polymerisation von Ethylenimin mit polyhalogenierten Verbindungen im Molverhältnis 44 : 1 bis 27 : 1 bekannt, wobei man zunächst eine Mischung der beiden Reaktionspartner bei 10 bis 50°C unter Bildung eines Präpolymeren 2 bis 16 Stunden reagieren läßt, die Mischung dann durch Zugabe von Wasser oder Ethanol zu einer 5 bis 50 %igen Lösung verarbeitet, damit ein faserförmiges cellulosehaltiges Trägermaterial imprägniert und es bei 25°C trocknet bis das Präpolymer vernetzt ist. Aufgrund seiner Unlöslichkeit in Lösemitteln ist das Polymer mit dem faserförmigen Trägermaterial fest verbunden und kann nicht ohne weiteres isoliert werden. Die so erhältlichen Reaktionsprodukte werden zur Entfernung von Schwermetallionen wie Kupfer- oder Quecksilberionen aus wäßrigen Lösungen verwendet.

Aus der JP-A-63/041 532 ist bekannt, Aziridine mit 0,5 bis 40 Gew.-% eines Vernetzers in Kohlenwasserstoffen in Gegenwart von Dispergiermitteln und unter Einwirkung von sauren Katalysatoren zu festen Produkten zu polymerisieren, die beispielsweise zur Immobilisierung von Proteinen oder zur Entfernung von Metallionen aus wäßrigen Lösungen verwendet werden. Die bei der Polymerisation anfallenden Festprodukte sind jedoch nur schwer filtrierbar und enthalten anhaftende Dispergiermittel, die oft nur schwierig zu entfernen sind.

Verfahren zur Herstellung von feinteiligen, wasserunlöslichen Polymerisaten von Aziridinen durch Polymerisieren von Aziridinen in Gegenwart von mindestens zwei funktionelle Gruppen enthaltenden Vernetzern in einem inerten Lösemittel sind bekannt. Als inerte Lösemittel verwendet man mindestens einen Ether, wobei alle Ether in Betracht kommen, die gegenüber Aziridinen und Vernetzern inert und zumindest unter Reaktionsbedingungen flüssig sind.

Beispiele für Ether sind Dialkylether die 1 bis 6 C-Atome in der Alkylgruppe tragen, z.B. Diethylether, Methyl-n-propylether, Methyl-isopropylether, Methyl-n-butylether, Methyl-sec.-butylether, Methyl-tert.-butylether, Ethyl-hexylether und Di-n-butylether.

Weitere geeignete Ether sind endgruppenverschlossene Polyalkylenglykole, die z.B. 2 bis 50 Alkylenoxid-Einheiten einpolymerisiert enthalten. Als Endgruppenverschluß kommen C₁- bis C₄-Alkyl-Gruppen in Betracht. Vorzugsweise weisen die endgruppenverschlossenen Polyalkylenglykole Methyl- oder Ethylgruppen auf. Die endgruppenverschlossenen Polyalkylenglykole sind beispielsweise durch Alkylierung von Polyalkylenglykolen erhältlich. Geeignete Polyalkylenglykole sind beispielsweise Polyethylenglykole, Polypropylenglykole und Polybutylenglykole sowie Blockcopolymerisate aus Ethylenoxid und Propylenoxid oder Ethylenoxid und Butylenoxid oder aus Ethylenoxid, Propylenoxid und Butylenoxid oder Blockcopolymerisate aus Propylenoxid und Butylenoxid. Von endgruppenverschlossenen Polyalkylenglykolen werden vorzugsweise mit Methyl- oder Ethylgruppen beidseitig endgruppenverschlossene Glykole aus der folgenden Gruppe eingesetzt: Diethylenglykol, Triethylenglykol, Dipropylenglykol, Tripropylenglykol und Dibutylenglykol.

Weitere geeignete Ether leiten sich von beidseitig mit C₁- bis C₄-Alkylgruppen endgruppenverschlossenem Polytetrahydrofuran ab, das 2 bis 50 Tetrahydrofuraneinheiten im Molekül enthält. Vorzugsweise verwendet man aus dieser Gruppe mit Methyl- oder Ethylgruppen beidseitig endgruppenverschlossene Di- oder Tritetrahydrofuranether.

Weitere geeignete Ether leiten sich von jeweils beidseitig mit C₁- bis C₄-Alkyl endgruppenverschlossenem Ethylenglykol, Propylenglykol und Butylenglykol ab. Aus dieser Gruppe von Verbindungen verwendet man vorzugsweise die Dimethylether von Ethylenglykol, Propylenglykol und Butylenglykol. Weitere geeignete Lösemittel sind Tetrahydrofuran und Dioxan.

Bevorzugt werden bei dem erfindungsgemäßen Verfahren Methyltert.-butylether, Tetrahydrofuran, Dioxan oder Mischungen aus den genannten Lösemitteln eingesetzt.

Die Konzentration an Aziridin und Vernetzern in den gemäß Erfindung einzusetzenden inerten Ethern beträgt beispielsweise 1 bis 80, vorzugsweise 25 bis 50 Gew.-%, bezogen auf die Mischung. Geeignete Aziridine, die polymerisiert werden sind beispielsweise Ethylenimin, Propylenimin, N-(2-Aminoethyl)-aziridin, N-(3-Aminopropyl)aziridin und 1,2-Butylenimin.

Vorzugsweise setzt man Ethylenimin als Aziridin ein.

Geeignete Vernetzer, die mindestens zwei funktionelle Gruppen enthalten, sind α,ω- oder vicinale Dichloralkane wie 1,2-Dichlorethan, 1,2-Dichlorpropan, 1,3-Dichlorpropan, 1,4-Dichlorbutan und 1,6-Dichlorhexan. Weitere geeignete Vernetzer sind Glycidylhalogenide wie Epichlorhydrin, Polyepoxide wie Polyethylenglykolbisglycidylether oder Polyaziridine oder α-ω-Diisocyanate wie Hexamethylendiisocyanat, Chlorformiate, Phosgen und insbesondere halogenfreie Vernetzer. Die halogenfreien Vernetzer sind mindestens bifunktionell und sind vorzugsweise ausgewählt aus der Gruppe bestehend aus:
(1) Ethylencarbonat, Propylencarbonat und/oder Harnstoff,
(2) monoethylenisch ungesättigten Carbonsäuren und deren Estern, Amiden und Anhydriden, mindestens zweibasischen gesättigten Carbonsäuren oder Polycarbonsäuren sowie den jeweils davon abgeleiteten Estern, Amiden und Anhydriden,
(3) Umsetzungsprodukten von Polyetherdiaminen, Alkylendiaminen, Polyalkylenpolyaminen, Alkylenglykolen, Polyalkylenglykolen oder deren Gemischen mit monoethylenisch ungesättigten Carbonsäuren, Estern, Amiden oder Anhydriden monoethylenisch ungesättigter Carbonsäuren, wobei die Umsetzungsprodukte mindestens zwei ethylenisch ungesättigte Doppelbindungen, Carbonsäureamid-, Carboxyl- oder Estergruppen als funktionelle Gruppen aufweisen,
(4) mindestens zwei Aziridinogruppen enthaltenden Umsetzungsprodukten von Dicarbonsäureestern mit Ethylenimin
sowie Mischungen der genannten Vernetzer.

Von den Vernetzern der Gruppe (1) setzt man vorzugsweise Propylencarbonat ein.

Geeignete halogenfreie Vernetzer der Gruppe (2) sind z.B. monoethylenisch ungesättigte Monocarbonsäuren wie Acrylsäure, Methacrylsäure und Crotonsäure sowie die davon abgeleiteten Amide, Ester und Anhydride. Die Ester können sich von Alkoholen mit 1 bis 22, vorzugsweise 1 bis 18 C-Atomen ableiten. Die Amide sind vorzugsweise unsubstituiert, können jedoch einen C₁- bis C₂₂-Alkylrest als Substituent tragen.

Weitere halogenfreie Vernetzer der Gruppe (2) sind mindestens zweibasische gesättigte Carbonsäuren wie Dicarbonsäuren sowie die davon abgeleiteten Salze, Diester und Diamide. Diese Verbindungen können beispielsweise mit Hilfe der Formel 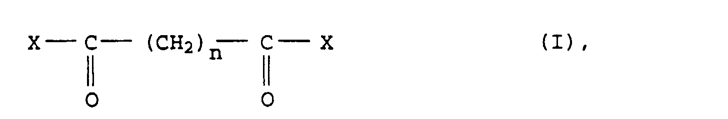 in der
X = OH, OR 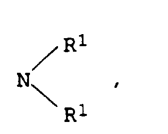
R = C₁- bis C₂₂-Alkyl,
R¹ = H, C₁- bis C₂₂-Alkyl und
n = O bis 22
charakterisiert werden. Außer den Dicarbonsäuren der Formel I eignen sich beispielsweise monoethylenisch ungesättigte Dicarbonsäuren wie Maleinsäure oder Itaconsäure. Die Ester der in Betracht kommenden Dicarbonsäuren leiten sich vorzugsweise von Alkoholen mit 1 bis 4 Kohlenstoffatomen ab. Geeignete Dicarbonsäureester sind beispielsweise Oxalsäuredimethylester, Oxalsäurediethylester, Oxalsäurediisopropylester, Bernsteinsäuredimethylester, Bernsteinsäurediethylester, Bernsteinsäurediisopropylester, Bernsteinsäuredi-n-propylester, Bernsteinsäurediisobutylester, Adipinsäuredimethylester, Adipinsäurediethylester und Adipinsäurediisopropylester. Geeignete Ester von ethylenisch ungesättigten Dicarbonsäuren sind beispielsweise Maleinsäuredimethylester, Maleinsäurediethylester, Maleinsäurediisopropylester, Itaconsäuredimethylester und Itaconsäurediisopropylester. Außerdem kommen substituierte Dicarbonsäuren und ihre Ester wie Weinsäure (D-, L-Form und als Racemat) sowie Weinsäureester, wie Weinsäuredimethylester und Weinsäurediethylester in Betracht.

Geeignete Dicarbonsäureanhydride sind beispielsweise Maleinsäureanhydrid, Itaconsäureanhydrid und Bernsteinsäureanhydrid. Die Vernetzung von Aziridinen mit den vorstehend genannten halogenfreien Vernetzern erfolgt unter Bildung von Amidgruppen bzw. bei Amiden wie Adipinsäurediamid durch Umamidierung. Maleinsäureester, monoethylenisch ungesättigte Dicarbonsäuren sowie deren Anhydride können sowohl durch Bildung von Carbonsäureamidgruppen als auch durch Addition von NH-Gruppen nach Art einer Michael-Addition eine Vernetzung bewirken.

Zu mindestens zweibasischen gesättigten Carbonsäuren gehören beispielsweise Tri- und Tetracarbonsäuren wie Citronensäure, Propantricarbonsäure, Ethylendiamintetraessigsäure und Butantetracarbonsäure. Als Vernetzer der Gruppe (2) kommen außerdem die von den vorstehend genannten Carbonsäuren abgeleiteten Salze, Ester, Amide und Anhydride in Betracht.

Geeignete Vernetzer der Gruppe (2) sind außerdem Polycarbonsäuren, die durch Polymerisieren von monoethylenisch ungesättigten Carbonsäuren oder Anhydriden erhältlich sind. Als monoethylenisch ungesättigte Carbonsäuren kommen z.B. Acrylsäure, Methacrylsäure, Crotonsäure, Maleinsäure und/oder Itaconsäure in Betracht. So eignen sich als Vernetzer z.B. Polyacrylsäuren, Copolymerisate aus Acrylsäure und Methacrylsäure oder Copolymerisate aus Acrylsäure und Maleinsäure.

Weitere geeignete Vernetzer (2) werden z.B. durch Polymerisieren von Anhydriden wie Maleinsäureanhydrid in einem inerten Lösemittel wie Toluol, Xylol, Ethylbenzol, Isopropylbenzol oder Lösemittelgemischen in Gegenwart von Radikalen bildenden Initiatoren hergestellt. Als Initiatoren verwendet man vorzugsweise Peroxyester wie tert.-Butyl-per-2-ethylhexanoat. Außer den Homopolymerisaten kommen Copolymerisate von Maleinsäureanhydrid in Betracht, z.B. Copolymerisate aus Acrylsäure und Maleinsäureanhydrid oder Copolymerisaten aus Maleinsäureanhydrid und einem C₂- bis C₃₀-Olefin.

Bevorzugt sind beispielsweise Copolymerisate aus Maleinsäureanhydrid und Isobuten oder Copolymerisate aus Maleinsäureanhydrid und Diisobuten. Die Anhydridgruppen enthaltenden Copolymerisate können gegebenenfalls durch Umsetzung mit C₁- bis C₂₀-Alkoholen oder Ammoniak oder Aminen modifiziert sein und in dieser Form als Vernetzer eingesetzt werden.

Die Molmasse Mw der Homo- und Copolymeren beträgt z.B. bis zu 10000, vorzugsweise 500 bis 5000. Polymerisate der oben genannten Art werden z.B. beschrieben in EP-A- 0 276 464, US-A-3 810 834, GB-A-1 411 063 und US-A-4 818 795. Die mindestens zweibasischen gesättigten Carbonsäuren und die Polycarbonsäuren können auch in Form der Alkali- oder Ammoniumsalze als Vernetzer eingesetzt werden. Bevorzugt verwendet man dabei die Natriumsalze. Die Polycarbonsäuren können partiell, z.B. zu 10 bis 50 mol-% oder auch vollständig neutralisiert sein.

Bevorzugt eingesetzte Verbindungen der Gruppe (2) sind Weinsäuredimethylester, Weinsäurediethylester, Adipinsäuredimethylester, Adipinsäurediethylester, Maleinsäuredimethylester, Maleinsäurediethylester, Maleinsäureanhydrid, Maleinsäure, Acrylsäure, Acrylsäuremethylester, Acrylsäureethylester, Acrylamid und Methacrylamid.

Halogenfreie Vernetzer der Gruppe (3) sind beispielsweise Umsetzungsprodukte von Polyetherdiaminen, Alkylendiaminen, Polyalkylenpolyaminen, Alkylenglykolen, Polyalkylenglykolen oder deren Gemischen mit
- monoethylenisch ungesättigten Carbonsäuren,
- Estern monoethylenisch ungesättigter Carbonsäuren,
- Amiden monoethylenisch ungesättigter Carbonsäuren oder
- Anhydriden monoethylenisch ungesättigter Carbonsäuren.

Die Polyetherdiamine werden beispielsweise durch Umsetzung von polyalkylenglykolen mit Ammoniak hergestellt. Die Polyalkylenglykole können 2 bis 50, vorzugsweise 2 bis 40 Alkylenoxideinheiten enthalten. Hierbei kann es sich beispielsweise um Polyethylenglykole, Polypropylenglykole, Polybutylenglykole oder auch um Blockcopolymerisate aus Ethylenglykol und Propylenglykol, Blockcopolymerisate aus Ethylenglykol und Butylenglykol oder um Blockcopolymerisate aus Ethylenglykol, Propylenglykol und Butylenglykol handeln. Außer den Blockcopolymerisaten eignen sich zur Herstellung der Polyetherdiamine statistisch aufgebaute Copolymerisate aus Ethylenoxid und Propylenoxid und gegebenenfalls Butylenoxid. Polyetherdiamine leiten sich außerdem von Polytetrahydrofuranen ab, die 2 bis 75 Tetrahydrofuraneinheiten aufweisen. Die Polytetrahydrofurane werden ebenfalls durch Umsetzung mit Ammoniak in die entsprechenden α,ω-Polyetherdiamine überführt. Vorzugsweise verwendet man zur Herstellung der Polyetherdiamine Polyethylenglykole oder Blockcopolymerisate aus Ethylenglykol und Propylenglykol.

Als Alkylendiamine kommen beispielsweise Ethylendiamin, Propylendiamin, 1,4-Diaminobutan und 1,6-Diaminohexan in Betracht. Geeignete Polyalkylenpolyamine sind beispielsweise Diethylentriamin, Triethylentetramin, Dipropylentriamin, Tripropylentetramin, Dihexamethylentriamin, Aminopropylethylendiamin, Bis-Aminopropylethylendiamin und Polyethylenimine mit Molmassen bis zu 5000. Die vorstehend beschriebenen Amine werden mit monoethylenisch ungesättigten Carbonsäuren, Estern, Amiden oder Anhydriden monoethylenisch ungesättigter Carbonsäuren so umgesetzt, daß die entstehenden Produkte mindestens 2 ethylenisch ungesättigte Doppelbindungen, Carbonsäureamid-, Carboxyl- oder Estergruppen als funktionelle Gruppen aufweisen. So erhält man beispielsweise bei der Umsetzung der in Betracht kommenden Amine oder Glykole mit Maleinsäureanhydrid Verbindungen, die beispielsweise mit Hilfe der Formel II charakterisiert werden können: 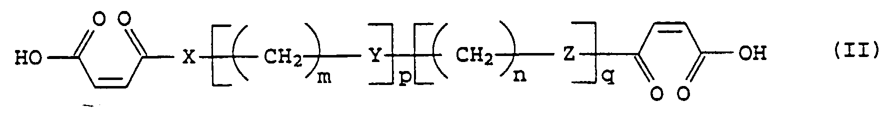 in der
X, Y, Z = O, NH
und Y zusätzlich noch CH₂

m, n = 0 - 4
p, q = 0 - 45000
bedeuten.

Die Verbindungen der Formel (II) sind beispielsweise dadurch erhältlich, daß man Alkylenglykole, Polyethylenglykole, Polyethylenimine, Polypropylenimine, Polytetrahydrofurane, α,ω-Diole oder α,ω-Diamine mit Maleinsäureanhydrid oder den oben angegebenen anderen monoethylenisch ungesättigten Carbonsäuren bzw. Carbonsäurederivaten umsetzt. Die für die Herstellung der Vernetzer II in Betracht kommenden Polyethylenglykole haben vorzugsweise Molmassen von 62 bis 10000, die Molmassen der Polyethylenimine betragen vorzugsweise 129 bis 50000 die der Polypropylenimine 171 bis 50000. Als Alkylenglykole eignen sich z.B. Ethylenglykol, 1,2-Propylenglykol, 1,4-Butandiol und 1,6-Hexandiol.

Vorzugsweise zur Herstellung der Vernetzer der Formel II eingesetzte α,ω-Diamine sind Ethylendiamin und von Polyethylenglykolen oder von Polytetrahydrofuranen mit Molmassen M_{w} von jeweils ca. 400 bis 5000 abgeleitete α,ω-Diamine.

Besonders bevorzugt in Betracht kommende Vernetzer der Formel II sind Umsetzungsprodukte von Maleinsäureanhydrid mit α,ω-Polyetherdiaminen einer Molmasse von 400 bis 5000, die Umsetzungsprodukte von Polyethyleniminen einer Molmasse von 129 bis 50000 mit Maleinsäureanhydrid sowie die Umsetzungsprodukte von Ethylendiamin oder Triethylentetramin mit Maleinsäureanhydrid im Mol-verhältnis von 1:mindestens 2. Bei der Umsetzung von Polyalkylenglykolen bzw. Diolen mit monoethylenisch ungesättigten Carbonsäuren, ihren Estern, Amiden oder Anhydriden entstehen unter Erhalt der Doppelbindung der monoethylenisch ungesättigten Carbonsäuren bzw. ihrer Derivate, Vernetzer, bei denen die monoethylenisch ungesättigten Carbonsäuren bzw. ihre Derivate über eine Amidgruppe mit den Polyetherdiaminen, Alkylendiaminen, oder Polyalkylenpolyaminen und über eine Estergruppe mit den Alkylenglykolen bzw. Polyalkylenglykolen verknüpft sind. Diese Umsetzungsprodukte enthalten mindestens zwei ethylenisch ungesättigte Doppelbindungen. Dieser Vernetzertyp reagiert mit den Aziridinen bzw. den Aminogruppen der sich bildenden Polymeren nach Art einer Michael-Addition der Aminogruppen der Polymeren an die endständigen Doppelbindungen dieser Vernetzer und gegebenenfalls zusätzlich unter Bildung von Amidgruppen.

Polyetherdiamine, Alkylendiamine und Polyalkylenpolyamine können mit Maleinsäureanhydrid oder den ethylenisch ungesättigten Carbonsäuren bzw. deren Derivaten auch unter Anlagerung an die Doppelbindung nach Art einer Michael-Addition reagieren. Hierbei erhält man Vernetzer der Formel III 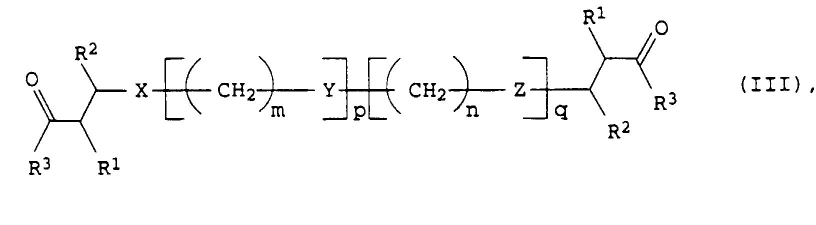 in der
X, Y, Z = O, NH
und Y zusätzlich noch CH₂
R¹ = H, CH₃
R² = H, COOMe, COOR, CONH₂
R³ = OR, NH₂, OH, OMe
R = C₁- bis C₂₂-Alkyl
Me = H, Na, K, Mg, Ca

m, n = 0 - 4
p, q = 0 - 45000
bedeuten.

Die Vernetzer der Formel (III) bewirken über ihre endständigen Carboxyl- oder Estergruppen unter Ausbildung einer Amidfunktion eine Vernetzung mit den Aminogruppen der bei der Polymerisation entstehenden Polymeren. Zu dieser Klasse von Vernetzersystemen gehören auch die Umsetzungsprodukte von monoethylenisch ungesättigten Carbonsäureestern mit Alkylendiaminen und Polyalkylenpolyaminen, z.B. eignen sich die Additionsprodukte von Ethylendiamin, Diethylentriamin, Triethylentetramin, Tetraethylenpentamin sowie von Polyethyleniminen mit Molmassen von beispielsweise 129 bis 50000 an Acrylsäure- oder Methacrylsäureester, wobei man auf 1 Mol der Aminkomponente mindestens 2 Mol der Acrylsäure- oder Methacrylsäureester einsetzt. Als Ester monoethylenisch ungesättigter Carbonsäuren setzt man bevorzugt die C₁- bis C₆-Alkylester der Acrylsäure oder Methacrylsäure ein. Besonders bevorzugt zur Herstellung der Vernetzer werden Acrylsäuremethylester und Acrylsäureethylester. Die Vernetzer, die durch Michael-Addition von Polyalkylenpolyaminen und ethylenisch ungesättigten Carbonsäuren, Estern, Amiden oder Anhydriden hergestellt werden, können mehr als zwei funktionelle Gruppen aufweisen. Die Anzahl dieser Gruppen hängt davon ab, in welchem Mol-Verhältnis die Reaktionsteilnehmer bei der Michael-Addition eingesetzt werden. So kann man z.B. an ein Mol eines 10 Stickstoffatome enthaltenden Polyalkylenpolyamins 2 bis 10, vorzugsweise 2 bis 8 Mol an ethylenisch ungesättigten Carbonsäuren bzw. ihren Derivaten nach Art einer Michael-Addition anlagern. An jeweils 1 Mol Polyalkylendiamine und Alkylendiamine können mindestens 2 bis höchstens 4 Mol der ethylenisch ungesättigten Carbonsäuren bzw. ihrer Derivate nach Art einer Michael-Addition angelagert werden.

Bei der Umsetzung von Diethylentriamin und einer Verbindung der Formel 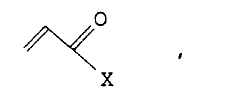 in der X = OH, NH₂ oder OR¹ und R¹ = C₁- bis C₂₂-Alkyl bedeutet, entsteht nach Art einer Michael-Addition beispielsweise ein Vernetzer der Struktur 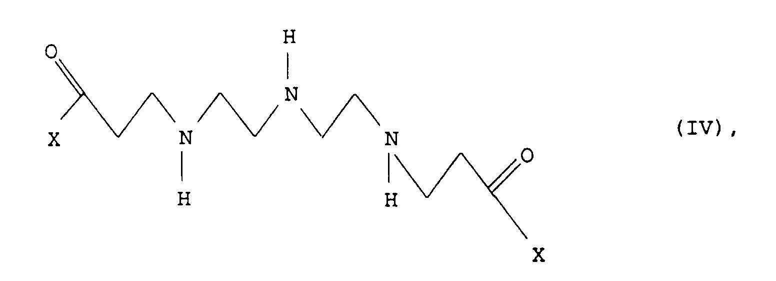 in der
X = NH₂, OH oder OR¹ und
R¹ für C₁- bis C₂₂-Alkyl steht.

Die sekundären NH-Gruppen in den Verbindungen der Formel IV können gegebenenfalls mit Acrylsäure, Acrylamid oder Acrylestern nach Art einer Michael-Addition reagieren.

Als Vernetzer der Gruppe (3) verwendet man vorzugsweise die Verbindungen der Formel II, die mindestens 2 Carboxylgruppen enthalten und durch Umsetzung von Polyetherdiaminen, Ethylendiamin oder Polyalkylenpolyaminen mit Maleinsäureanhydrid erhältlich sind oder mindestens 2 Estergruppen enthaltende Michael-Additionsprodukte aus Polyetherdiaminen, Polyalkylenpolyaminen oder Ethylendiamin und Estern der Acrylsäure oder Methacrylsäure mit jeweils einwertigen 1 bis 4 C-Atome enthaltenden Alkoholen.

Als halogenfreie Vernetzer der Gruppe (4) kommen Reaktionsprodukte in Betracht, die durch Umsetzung von Dicarbonsäureestern, die mit einwertigen Alkoholen mit 1 bis 5 Kohlenstoffatomen vollständig verestert sind, mit Ethylenimin hergestellt werden. Geeignete Dicarbonsäureester sind beispielsweise Oxalsäuredimethylester, Oxalsäurediethylester, Bernsteinsäuredimethylester, Bernsteinsäurediethylester, Adipinsäuredimethylester, Adipinsäurediethylester und Glutarsäuredimethylester. So erhält man beispielsweise bei der Umsetzung von Diethyloxalat mit Ethylenimin Bis-[β-(1-Aziridino)ethyl]oxalsäureamid. Die Dicarbonsäureester werden mit Ethylenimin beispielsweise im Molverhältnis von 1 zu mindestens 4 umgesetzt. Reaktive Gruppe dieser Vernetzer sind die endständigen Aziridingruppen. Diese Vernetzer können beispielsweise mit Hilfe der Formel V charakterisiert werden: 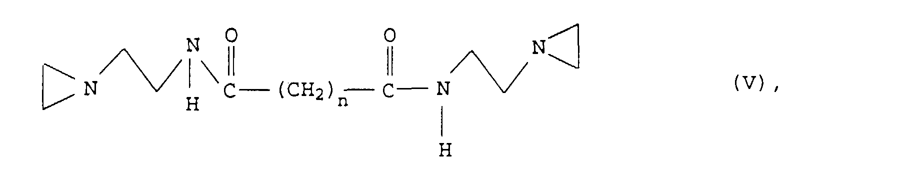 worin n = 0 bis 22 bedeutet.

Vorzugsweise werden feinteilige, wasserunlösliche Polymerisate hergestellt, indem man Ethylenimin mit 1,2-Dichlorethan, Epichlorhydrin oder Ethylendiamin-N,N'-(bis-Maleinsäurehalbamid) polymerisiert. Die Vernetzer werden dabei in solchen Mengen eingesetzt, daß wasserunlösliche Polymerisate entstehen. Die Mengen an Vernetzer betragen beispielsweise 0,001 bis 0,5, vorzugsweise 0,01 bis 0,1 Mol-%, bezogen auf Aziridine. Die Polymerisation der Aziridine wird in üblicher Weise initiiert, z.B. mit Säuren oder Lewissäuren wie Bortrifluoridetherat. Die Polymerisation der Aziridine, insbesondere von Ethylenimin, wird auch von Vernetzern initiiert, z.B. eignen sich als Initiatoren Epichlorhydrin, Phosgen oder Dichloralkane wie Ethylenchlorid. Die vernetzende Polymerisation von Aziridinen, insbesondere von Ethylenimin kann in Abwesenheit der üblichen Säuren durchgeführt werden, wenn man als Vernetzer beispielsweise eine Carboxylgruppen aufweisende Verbindung der Formel I, II, III und/oder IV einsetzt. Insbesondere die oben beschriebenen halogenfreien Vernetzer der Gruppen (3) und (4) wirken beispielsweise bei der Polymerisation von Ethylenimin als sogenannte Spacer und führen über verbrückte bi- oder. polyfunktionelle N-substituierte Aziridine der Struktur VI durch weitere Copolymerisation mit Ethylenimin zu großflächigen unlöslichen Molekülen der Struktur VII: 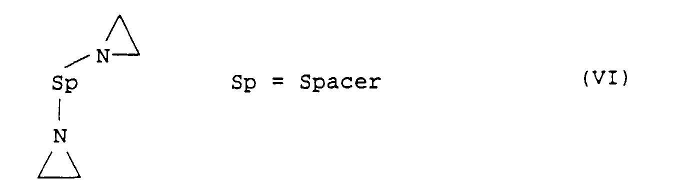 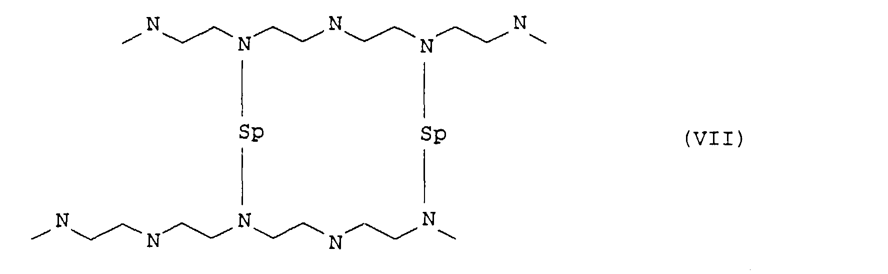 Man erhält wasserunlösliche Polymerisate von Aziridinen mit Teilchengrößen in dem Bereich von beispielsweise 10 bis 10000, vorzugsweise 100 bis 5000 µm.

Die oben beschriebenen feinteiligen, wasserunlöslichen, vernetzten Polyaziridine können mit Hilfe von polymeranalogen Umsetzungen modifiziert werden. Die vernetzten Polymeren sind für die Modifizierung besonders gut geeignet, wenn sie in feinteiliger Form vorliegen. Man kann jedoch auch nach anderen Verfahren hergestellte vernetzte Polyethylenimine modifizieren. Die bekannten vernetzten Polyethylenimine werden gegebenenfalls zunächst in eine feinteilige Form gebracht, z.B. durch Mahlen eines festen vernetzten Polyethylenimins. Danach werden die feinteiligen, vernetzten Polyethylenimine in Wasser aufgeschlämmt und in Form von Polymersuspensionen polymeranalogen Umsetzungen unterworfen. Vernetzte Polyethylenimine können beispielsweise nach dem aus der US-A-3 332 841 bekannten Verfahren durch Vernetzung von Polyalkyleniminen mit mindestens bifunktionellen Vernetzern in einem inerten Lösemittel hergestellt werden. Pro Mol Polyethylenimin (berechnet als Monomer) verwendet man beispielsweise 0,001 bis 0,5 Mol eines Vernetzungsmittels. Als Vernetzungsmittel kommen beispielsweise Epichlorhydrin, Weinsäureester, Acrylsäureester, Butadiendioxid und α-, ω-Dihalogenalkane wie Ethylenchlorid in Betracht. Polyethylenimine können jedoch auch mit den oben beschriebenen anderen Vernetzern, insbesondere mit den halogenfreien Vernetzern, durch Erhitzen vernetzt werden. Für die Vernetzung von Polyethyleniminen werden hierbei die oben beschriebenen halogenfreien Vernetzer der dort mit (1) bis (4) bezeichneten Gruppen bevorzugt.

Der Erfindung liegt die Aufgabe zugrunde, neue Stoffe zur Verfügung zu stellen, die sich zur Entfernung von Metallionen aus wäßrigen Lösungen eignen.

Gegenstand der Erfindung sind modifizierte, feinteilige, wasserunlösliche Polymerisate von Aziridinen, die erhältlich sind durch Umsetzung von feinteiligen, wasserunlöslichen, vernetzten Polymerisaten von Aziridinen in wäßrigem Medium mit Schwefelkohlenstoff oder mit Formaldehyd und einem nukleophilen Agens aus der Gruppe bestehend aus Alkalimetallcyaniden, primären Aminen, sekundären Aminen, Alkalimetallsulfiten und Alkalimetallphosphiten. Eine besonders bevorzugte Art der Modifizierung ist die Carboxymethylierung von feinteiligen, wasserunlöslichen, vernetzten Polyethyleniminen mit Formaldehyd und Alkalicyaniden nach Art einer Strecker-Reaktion. Besonders bevorzugte modifizierte, feinteilige, wasserunlösliche, vernetzte Polyethylenimine sind erhältlich durch Carboxymethylierung unter vermindertem Druck und gleichzeitigem Durchleiten eines inerten Gases durch das Reaktionsgemisch. Modifizierte, feinteilige, wasserunlösliche, vernetzte Polyethylenimine sind vorzugsweise dadurch erhältlich, daß man die Carboxymethylierung von feinteiligen, wasserunlöslichen, vernetzten Polyethyleniminen mit Formaldehyd und Natriumcyanid in wäßrigem Medium bei Temperaturen von 60 bis 110°C und Drücken von 0,1·10⁵ bis 0,8·10⁵ Pa (100 bis 800 mbar) durchführt. Die Konzentration an vernetzten Polyethyleniminen in der wäßrigen Suspension beträgt beispielsweise 1 bis 50, vorzugsweise 5 bis 25 Gew.-%.

Eine weitere Modifizierung der feinteiligen, vernetzten Polyethylenimine gelingt durch Phosphonomethylierung von feinteiligen, wasserunlöslichen, vernetzten Polyethyleniminen mit Formaldehyd und Alkalimetallphosphiten. Eine andere Art der Modifizierung der vernetzten Polyethylenimine besteht in der Umsetzung nach Art einer Mannich-Reaktion. Gegenstand der Erfindung sind daher modifizierte, feinteilige, wasserunlösliche, vernetzte Polyethylenimine, die durch Mannich-Reaktion von feinteiligen, wasserunlöslichen, vernetzten Polyethyleniminen mit Formaldehyd und primären und/oder sekundären Aminen erhältlich sind.

Eine weitere Modifizierung besteht in der Umsetzung von feinteiligen, wasserunlöslichen, vernetzten Polyethyleniminen mit Formaldehyd und Alkalimetallsulfiten bei Temperaturen von 60 bis 110°C.

Gegenstand der Erfindung sind außerdem modifizierte, feinteilige, wasserunlösliche, vernetzte Polymerisate von Aziridinen, die erhältlich sind durch Umsetzung von feinteiligen, wasserunlöslichen, vernetzten Polyethyleniminen bei Temperaturen von 0 bis 30°C mit Schwefelkohlenstoff. Hierbei bilden sich Dithiocarbamate.

Durch polymeranaloge Derivatisierung von feinteiligen, vernetzten Polyethyleniminen der oben beschriebenen Art kann man die anwendungstechnischen Eigenschaften von wasserunlöslichen, vernetzten Polyethylenimine verbessern. So gelingt es beispielsweise durch Carboxymethylierung von vernetzten, feinteiligen, wasserunlöslichen Polyethyleniminen die Absorptionsfähigkeit von Schwermetallionen, insbesondere von Ionen der Hauptgruppenmetalle, Übergangsmetalle, Lanthaniden und Aktiniden aus Abwässern stark zu erhöhen. Die Modifizierung von vernetzten Polyethyleniminen durch Carboxymethylierung führt insbesondere zu einer starken Erhöhung des Absorptionsvermögens der modifizierten vernetzten Polyethylenimine für Nickel-, Chrom-III-, Kobalt-, Silber-, Mangan-II- und Cadmium-Ionen aus Abwässern. Die Carboxymethylierung von Polyethyleniminen wird vorzugsweise nach der oben beschriebenen Strecker-Synthese durchgeführt. Sie kann aber auch mit Hilfe einer Umsetzung der vernetzten Polyethylenimine mit Chloressigsäure erfolgen. Besonders vorteilhaft werden hierbei durch Strecker-Synthese erhaltene modifizierte vernetzte Polyethylenimine verwendet, die einen Carboxymethylierungsgrad von 75 bis 100, vorzugsweise 80 bis 95 % aufweisen. Die carboxymethylierten vernetzten Polyethylenimine weisen gegenüber den nicht modifizierten vernetzten Polyethyleniminen eine verbesserte Metallkomplexierung auf. Bei der Beladung von carboxymethylierten, vernetzten, feinteiligen Polyethyleniminen mit hohen Mengen an Übergangsmetallen entstehen intensiv gefärbte Komplexe. Es handelt sich hierbei um harte Verbindungen, die beispielsweise im Fall des blauen Kupfer-II-Komplexes auf ca. 6 Stickstoffatome ein Kupfer-II-Ion gebunden enthalten. Solche harten Verbindungen können in gemahlenem Zustand beispielsweise als Pigmente verwendet werden.

Die feinteiligen, wasserunlöslichen, vernetzten Polymerisate von Aziridinen und die modifizierten feinteiligen, wasserunlöslichen, vernetzten Polymerisate von Aziridinen werden zur Immobilisierung von Wirkstoffen, als Absorptionsmittel für Aldehyde, Ketone und Säuren sowie zur Entfernung von Schwermetallionen aus Abwässern verwendet. Wenn man die feinteiligen, wasserunlöslichen, vernetzten Polyaziridine, vorzugsweise Polyethylenimine zur Immobilisierung von Wirkstoffen einsetzt, so erfolgt die Fixierung der Wirkstoffe über eine Salzbildung der basischen Aminfunktionen des feinteiligen vernetzten Polyethylenimins mit sauren Funktionen des Wirkstoffs, über labile chemische Bindungen des Wirkstoffs an den vernetzten Polyaziridinen oder über eine gemeinsame Koordination des Wirkstoffs und des festen, vernetzten Polyethylenimins an ein Schwermetallion. So läßt sich beispielsweise N-Cyclohexyldiazeniumdioxi-Kalium, das ein wasserlösliches Biozid für den Holzschutz ist, über eine Kupferkoordination fest an das feinteilige, vernetzte Polyethylenimin binden. Um diesen Komplex herzustellen, bildet man zunächst den Kupferkomplex aus wasserunlöslichen, feinteiligen Polyethyleniminen (die Komplexe enthalten auf 1 Cu-Atom mindestens 6 N-Atome) und behandelt diesen Komplex anschließend mit N-Cyclohexyldiazeniumdioxi-Kalium in wäßrigem Medium. Dabei entstehen feinteilige, wasserunlösliche Aufschlämmungen von Verbindungen mit folgenden Strukturelementen: 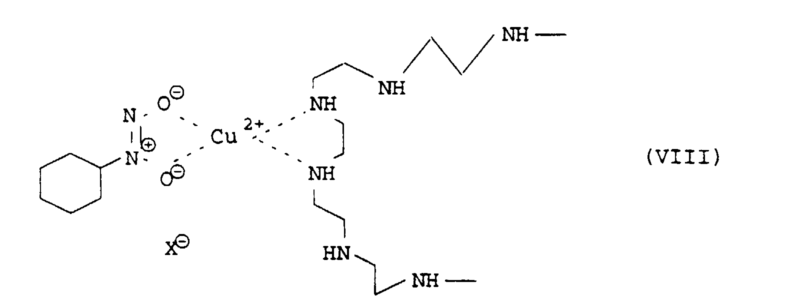 X = ein Anion, vorzugsweise Chlorid, Sulfat oder Nitrat.

Eine Immobilisierung des obengenannten Biozids auf vernetztem Polyethylenimin kann jedoch auch dadurch erhalten werden, daß man beispielsweise Bis(N-Cyclohexyldiazeniumdioxi)-Kupfer in einem organischen Lösemittel löst, z.B. in Aceton, und die Lösung dann mit festem, teilchenförmigen vernetzten Polyethylenimin in Kontakt bringt. Die an feinteiligen, wasserunlöslichen Polyethyleniminen immobilisierten Wirkstoffe werden kontrolliert freigesetzt. So kann man beispielsweise die mit Bis-(N-Cyclohexyldiazeniumdioxi)-Kupfer behandelten feinteiligen, wasserunlöslichen Polyethylenimine als Holzschutzmittel verwenden. An besonders gefährdeten Stellen des Holzes wird beispielsweise ein Schutzmitteldepot des immobilisierten Wirkstoffs angelegt (z.B. Bohrlochverfahren, Bandagen oder Patronen). Da das Biozid langsam freigesetzt wird, kann das Holz gegen eine Vielzahl von Fäulniserregern über viele Jahre geschützt werden. Analoge Ergebnisse können beispielsweise mit Bis-(N-Cyclohexyldiazeniumdioxi)-Zink oder Tris-(N-Cyclohexyldiazeniumdioxi)-Aluminium erzielt werden.

Außer Bioziden können auch andere Wirkstoffe, wie Pharmazeutika, Kosmetika oder Pflanzenschutzmittel an den feinteiligen, wasserunlöslichen Polyaziridinen immobilisiert werden. Bei entsprechender Anwendung der immobilisierten Wirkstoffe erfolgt ebenfalls eine gezielte Freisetzung der Wirkstoffe.

Die feinteiligen, wasserunlöslichen, vernetzten Polyaziridine eignen sich außerdem als Absorptionsmittel zur Extraktion von Formaldehyd oder anderen Aldehyden und Ketonen aus Abwässern oder aus der Abluft. Hierbei ergeben sich viele Einsatzmöglichkeiten, z.B. können die vernetzten, feinteiligen Polyethylenimine in Zigarettenfiltern, in Filtern bei der Abwasserreinigung oder zur Absorption von Formaldehyd in Preßspanplatten eingesetzt werden. Die feinteiligen, vernetzten Polyethylenimine eignen sich außerdem zur Absorption saurer Gase wie Schwefeldioxid, Schwefeltrioxid, Chlorwasserstoff und Kohlendioxid. Sie können beispielsweise auch zur Entfernung von sauren Verbindungen wie Benzoesäure oder p-Toluolsulfonsäure aus wäßrigen Lösungen eingesetzt werden.

Die feinteiligen, wasserunlöslichen Polymerisate von Aziridinen eignen sich außerdem zur Entfernung von Schwermetallionen aus Abwässern. Besonders bevorzugt ist hierbei die Fest-Flüssig-Extraktion von Schwermetallen (Hauptgruppermetalle, Übergangsmetalle, Lanthaniden, Aktiniden) aus wäßrigen Lösungen oder Abwässern. Besonders bevorzugt ist die Extraktion von Eisen-, Zink-, Kupfer-, Blei-, Rhodium- und Quecksilberionen mit feinteiligen wasserunlöslichen Polymerisaten von Aziridinen und zusätzlich von Chrom-, Mangan-, Nickel-, Silber- und Cadmiumionen mit carboxymethylierten feinteiligen wasserunlöslichen Polymerisaten von Aziridinen. Dithiocarbamate von feinteiligen wasserunlöslichen Polymerisaten von Aziridinen können bevorzugt zur Extraktion von Nickelionen aus Abwässern eingesetzt werden sowie als Biozide.

### Vergleichsbeispiel 1

In einer mit einem Rührer und einer Zulaufvorrichtung sowie für das Arbeiten unter Stickstoff ausgestatteten Apparatur werden 100 ml Methyl-tert.-butylether und 0,025 mol Ethylendiamin-1,4-bis(Maleinsäurehalbamid) vorgelegt und unter Rühren auf eine Temperatur von 50°C erhitzt. Sobald diese Temperatur erreicht ist, gibt man innerhalb von 30 min ein mol Ethylenimin zu und rührt das Reaktionsgemisch 48 h bei 50°C. Es entsteht ein weißer, fester Niederschlag, der abgesaugt und getrocknet wird. Das so erhältliche feinteilige, vernetzte Polyethylenimin ist in Wasser und üblichen organischen Lösemitteln unlöslich.

### Vergleichsbeispiel 2

In einer mit einem Rührer und einer Dosiervorrichtung ausgestatteten Polymerisationsapparatur werden 100 ml Methyl-tert.-butylether und 0,025 mcl (2,3 g) Epichlorhydrin vorgelegt und unter intensivem Rühren auf eine Temperatur von 50°C erwärmt. Sobald diese Temperatur erreicht ist, fügt man 1 mol (43 g) Ethylenimin innerhalb von 30 min zu. Das Reaktionsgemisch wird solange bei 50°C gerührt, kein Ethylenimin mehr nachweisbar ist. Der entstandene weiße, feste Niederschlag wird abgesaugt und getrocknet.

### Vergleichsbeispiel 3

In der in Beispiel 1 beschriebenen Polymerisationsapparatur werden 100 ml Tetrahydrofuran und 0,025 mol (2,5 g) 1,2-Dichlorethan vorgelegt und unter Rühren auf eine Temperatur von 50°C erhitzt. Sobald diese Temperatur erreicht ist, dosiert man innerhalb von 30 min 1 mol (43 g) Ethylenimin zu. Das Reaktionsgemisch wird anschließend solange bei 50°C gerührt, bis kein Ethylenimin mehr nachweisbar ist. Man erhält einen weißen, feinteiligen Niederschlag, der abgesaugt und getrocknet wird.

### Vergleichsbeispiel 4

In der in Beispiel 1 angegebenen Apparatur legt man 100 ml Methyl-tert.-butylether und 0,025 mol (2,5 g) 1,2-Dichlorethan vor und erhitzt die Lösung auf 50°C. Sobald diese Temperatur erreicht ist, dosiert man innerhalb von 30 min 1 mol (43 g) Ethylenimin zu. Das Reaktionsgemisch wird anschließend solange bei 50°C gerührt, bis kein Ethylenimin mehr nachweisbar ist. Der entstandene weiße, feinteilige Niederschlag wird abgesaugt und anschließend getrocknet.

### Vergleichsbeispiel 5

Um die Formaldehydabsorption von feinteiligem, vernetztem Polyethylenimin zu prüfen, wurde eine wäßrige Lösung mit einem Formaldehydgehalt von 100 ppm mit 1 g/l des nach Vergleichsbeispiel 4 hergestellten feinteiligen, vernetzten Polyethylenimins versetzt und 24 h gerührt. Nach den in der Tabelle angegebenen Zeiten wurde der Formaldehydgehalt der Lösung bestimmt.

**Tabelle 1**

| | | | | | | | | |
|---|---|---|---|---|---|---|---|---|
| Zeit [h] | 0 | 0,25 | 0,5 | 1 | 2 | 4 | 6 | 24 |
| Formaldehyd [ppm] | 100 | 70 | 30 | 15 | 7 | 6 | 5 | 5 |

### Vergleichsbeispiel 6

Um die Extraktion saurer Verbindungen aus wäßrigen Lösungen zu zeigen, wurde eine wäßrige Lösung mit einem Gehalt von 111 ppm p-Toluolsulfonsäure mit 1 g/l des feinteiligen, vernetzten Polyethylenimins versetzt, das nach Vergleichsbeispiel 4 erhalten wurde. Nach den in Tabelle 2 angegebenen Zeiten wurde jeweils die Konzentration an p-Toluolsulfonsäure gemessen.

**Tabelle 2**

| | | | | | |
|---|---|---|---|---|---|
| Zeit [h] | 0 | 0,25 | 0,5 | 1 | 2 |
| p-Toluolsulfonsäure [ppm] | 111 | 55 | 45 | 35 | 34 |

### Vergleichsbeispiel 7

150 g feinteiliges, vernetztes Polyethylenimin (hergestellt nach Vergleichsbeispiel 4) werden in 1 l einer 1-molaren wäßrigen Kupferchloridlösung 4 h bei Raumtemperatur gerührt. Danach wird der Niederschlag abgesaugt und solange mit Wasser gewaschen, bis die Cu²⁺-Ionenkonzentration im Filtrat unterhalb von 0,5 ppm liegt. Der blaue, feinteilige Rückstand wird getrocknet. Die Elementaranalyse des Rückstands ergibt ein Kupfer : Stickstoff-Verhältnis von 1 : 6,3.

### Vergleichsbeispiel 8

160 g des nach Vergleichsbeispiel 4 hergestellten feinteiligen, vernetzten Polyethylenimins mit einem Gehalt an basischem Stickstoff von 3,72 mol (bestimmt durch Elementaranalyse) werden zu einer Lösung von 0,62 mol Kupferchlorid in 1900 ml Wasser gegeben. Die Aufschlämmung wird 24 h bei Raumtemperatur gerührt. Danach wird der feinteilige Feststoff abgesaugt und mehrmals mit Wasser gewaschen, bis im Waschwasser keine Kupferionen mehr nachweisbar sind. Die Elementaranalyse des Rückstands ergibt ein Kupfer : Stickstoff-Verhältnis von 1 : 10,5.

### Vergleichsbeispiel 9

80 g Bis-(N-Cyclohexyldiazeniumdioxi)-kupfer-Komplex werden in 1500 ml Aceton gelöst. Zu der Lösung fügt man anschließend 123 g feinteiliges, vernetztes Polyethylenimin, das 2,86 mol basischen Stickstoff enthält und nach Vergleichsbeispiel 4 hergestellt wurde sowie 420 g Wasser. Nach 4stündigem intensivem Rühren wird der gebildete Komplex abgesaugt, mit Aceton gewaschen und getrocknet. Die Ausbeute beträgt 245 g. Die Elementaranalyse des Komplexes ergibt ein Verhältnis von C : N : Cu von 52,6 : 18,6 : 1.

### Vergleichsbeispiel 10

200 g des nach Vergleichsbeispiel 8 erhaltenen Komplexes aus vernetztem Polyethylenimin und Kupfer werden in 500 ml Wasser suspendiert. Danach trägt man 123 g N-Cyclohexyldiazeniumdioxi-Kalium ein und rührt die Mischung 24 h bei Raumtemperatur. Der Niederschlag wird anschließend abgesaugt, mit Wasser gewaschen und getrocknet. Wie die Analyse des Filtrats ergab, wurden 18,3 g N-Cycohexyldiazeniumdioxi-Kalium von dem eingesetzten Komplex aus vernetztem Polyethylenimin und Kupfer aufgenommen.

### Beispiel 1

In einem 2 1 fassenden Kessel, der mit einem Rührer, Dosiervorrichtungen und für das Arbeiten unter Druck ausgestattet ist, werden unter starkem Rühren zu einer auf 80°C erwärmten Suspension von 76,5 g (1,78 mol basischer Stickstoff) des nach Vergleichsbeispiel 4 hergestellten vernetzten, feinteiligen, unlöslichen Polyethylenimins in 730 ml Wasser 4,9 g (0,1 mol) Natriumcyanid gegeben. Man erniedrigt den Druck auf Werte in dem Bereich von 200 bis 300 mbar und leitet 10 bis 20 1 Stickstoff/h durch das Reaktionsgemisch. Über einen Zeitraum von 2,5 h gibt man kontinuierlich 250 g (1,68 mol) einer 33 %igen wäßrigen Natriumcyanid-Lösung sowie 178 g (1,78 mol) einer 30 %igen wäßrigen Formaldehyd-Lösung getrennt voneinander und gleichzeitig zu. Nach Ende der Dosierung wird die Suspension noch 2,5 h bei 80°C gerührt und anschließend mit 1,8 g (18 mmol) Formaldehyd versetzt, um das überschüssige Alkalicyanid zu vernichten. 3 h nach Formaldehyd-Zugabe wird der Rührer abgestellt und die wäßrige Lösung vom Niederschlag dekantiert. Man gibt 300 ml Wasser hinzu und dekantiert wiederum. Danach wird der Rückstand abfiltriert und wiederholt mit Wasser gewaschen. Es verbleibt eine gelartige Substanz, die getrocknet wird. Man erhält nach dem Trocknen 199 g Feststoff mit einer Restfeuchte von 4,2 %. Die Ausbeute beträgt 87 % der Theorie. Der Carboxymethylierungsgrad beträgt 80 %.

### Beispiel 2

43 g (1 mol basische Stickstoffgruppen) des vernetzten, feinteiligen Polyethylenimins, das nach Vergleichsbeispiel 4 hergestellt wurde, werden in 650 ml Wasser dispergiert. Man erhitzt die Suspension auf eine Temperatur von 80°C und tropft innerhalb von 0,5 h 94,5 g (1 mol) Chloressigsäure in 95 ml Wasser gelöst zu. Das Reaktionsgemisch wird 8 h bei einer Temperatur von 80°C gerührt. Danach filtriert man den Niederschlag ab und trocknet ihn in einem Stickstoffstrom. Das Filtrat enthält noch 28 % der eingesetzten Chloressigsäure. Der Substitutionsgrad des festen Polyethylenimins beträgt 72 %.

### Beispiel 3

Man stellt die in der folgenden Tabelle angegebenen Metallsalz-Lösungen her, die jeweils 100 ppm an Metallionen enthalten. Zu diesen Lösungen gibt man dann jeweils bei einem pH-Wert von 7 das nach Vergleichsbeispiel 4 erhaltene vernetzte, teilchenförmige Polyethylenimin und zu einer anderen Probe der Metallsalzlösungen das gemäß Beispiel 1 hergestellte carboxymethylierte Polyethylenimin. Die Mengen an festem Polyethylenimin betrugen jeweils 1 g/l. Die Suspensionen wurden intensiv gerührt. Die Metallionen-Konzentration wurde nach verschiedenen Zeiten mittels Atomabsorptions-Spektroskopie quantitativ analysiert. Die behandelten Lösungen hatten nach einer 6stündigen Behandlungsdauer die in der folgenden Tabelle angegebenen Konzentrationen an Metallionen.

| Metallion | Vernetztes Polyethylenimin | Carboxymethyliertes, vernetztes Polyethylenimin |
|---|---|---|
| Cr³⁺ | 27 ppm | 17 ppm |
| Mn²⁺ | 82 ppm | 6 ppm |
| Fe³⁺ | 9 ppm | 1 ppm |
| Co²⁺ | 90 ppm | 4 ppm |
| Rh³⁺ | 6 ppm | 2 ppm |
| Ni²⁺ | 54 ppm | 3 ppm |
| Cu²⁺ | 5 ppm | 2 ppm |
| Ag⁺ | 55 ppm | 4 ppm |
| Zn²⁺ | 8 ppm | 3 ppm |
| Cd²⁺ | 64 ppm | 4 ppm |
| Hg²⁺ | 8 ppm | 2 ppm |
| Pb²⁺ | 12 ppm | 5 ppm |

### Beispiel 4

Je 2,5 g des nach Beispiel 1 erhaltenen carboxymethylierten Polyethylenimins wurden in 50 ml Wasser suspendiert und mit jeweils 10 mmol Calciumacetat, Kupferacetat bzw. Eisenchlorid versetzt und 2 h bei 50°C gerührt. Durch Zugabe von Schwefelsäure wurde der pH-Wert auf 3 eingestellt. Nach 3 h wurde der Feststoff abfiltriert und mit 3 x 50 ml Wasser nachgewaschen. Filtrat und Waschwasser wurden vereinigt und mit 10 mmol Nitrilotriacetat versetzt. Danach wurde der Gehalt an freiem Nitrilotriacetat durch komplexometrische Titration bestimmt. Daraus ergab sich für das Polymer eine Beladekapazität von 1,88 mmol/g Calcium, 2,93 mmol/g Kupfer und 3,075 mmol/g an Eisen. Die Absorption von Calcium-, Kupfer- und Eisenionen aus waßrigen Lösungen liegt damit wesentlich höher als bei handelsüblichen Metallionenaustauschern, die eine Kapazität von etwa 0,5 mmol/g Ionenaustauscher haben.

### Beispiel 5

43 g (1 mol basischer Stickstoff) des nach Vergleichsbeispiel 4 hergestellten vernetzten, feinteiligen Polyethylenimins werden in 800 g Wasser suspendiert. Man kühlt die Suspension auf 0°C ab und gibt portionsweise 0,33 mol Schwefelkohlenstoff zu. Die Reaktionstemperatur wird dabei in dem Bereich von 0 bis 10°C gehalten. Nach Zugabe des Schwefelkohlenstoffs wird das Reaktionsgemisch solange bei Raumtemperatur gerührt, bis kein Schwefelkohlenstoff mehr nachweisbar ist. Der Feststoff wird abgesaugt, mit Wasser gewaschen und im Vakuum getrocknet. Man erhält ein hellgelbes feines Pulver.

## Patentansprüche

1. Modifizierte, feinteilige, wasserunlösliche Polymerisate von Aziridinen, dadurch gekennzeichnet, daß sie erhältlich sind durch Umsetzung von feinteiligen, wasserunlöslichen, vernetzten Polymerisaten von Aziridinen in wäßrigem Medium mit Schwefelkohlenstoff oder mit Formaldehyd und einem nucleophilen Agens aus der Gruppe bestehend aus Alkalimetallcyaniden, primären Aminen, sekundären Aminen, Alkalimetallsulfiten und Alkalimetallphosphiten.

2. Modifizierte, feinteilige, wasserunlösliche Polymerisate nach Anspruch 1, dadurch gekennzeichnet, daß sie erhältlich sind durch Carboxymethylierung von feinteiligen, wasserunlöslichen, vernetzten Polyethyleniminen mit Formaldehyd und Alkalicyaniden nach Art einer Streckerreaktion.

3. Modifizierte, feinteilige, wasserunlösliche, vernetzte Polyethylenimine nach Anspruch 1 oder 2, dadurch gekennzeichnet, daß sie erhältlich sind durch Carboxymethylierung unter vermindertem Druck und gleichzeitigem Durchleiten eines inerten Gases durch das Reaktionsgemisch.

4. Modifizierte, feinteilige, wasserunlösliche, vernetzte Polyethylenimine nach Anspruch 1 oder 2, dadurch gekennzeichnet, daß sie erhältlich sind durch Carboxymethylierung von feinteiligen, wasserunlöslichen, vernetzten Polyethyleniminen mit Formaldehyd und Natriumcyanid bei Temperaturen von 60 bis 110°C und Drücken von 0,1·10⁵ bis 0,8·10⁵ Pa (100 bis 800 mbar).

5. Modifizierte, feinteilige, wasserunlösliche, vernetzte Polyethylenimine nach Anspruch 1, dadurch gekennzeichnet, daß sie erhältlich sind durch Phosphonomethylierung von feinteiligen, wasserunlöslichen, vernetzten Polyethyleniminen mit Formaldehyd und Alkalimetallphosphiten.

6. Modifizierte, feinteilige, wasserunlösliche, vernetzte Polyethylenimine nach Anspruch 1 oder 2, dadurch gekennzeichnet, daß sie erhältlich sind durch Mannichreaktion von feinteiligen, wasserunlöslichen, vernetzten Polyethyleniminen mit Formaldehyd und primären und/oder sekundären Aminen.

7. Modifizierte, feinteilige, wasserunlösliche, vernetzte Polyethylenimine nach Anspruch 1, dadurch gekennzeichnet, daß sie erhältlich sind durch Umsetzung von feinteiligen, wasserunlöslichen, vernetzten Polyethyleniminen mit Formaldehyd und Alkalimetallsulfiten bei Temperaturen von 60 bis 110°C.

8. Modifizierte, feinteilige, wasserunlösliche, vernetzte Polymerisate von Aziridinen nach Anspruch 1, dadurch gekennzeichnet, daß sie erhältlich sind durch Umsetzung von feinteiligen, wasserunlöslichen, vernetzten Polyethyleniminen bei Temperaturen von 0 bis 30°C mit Schwefelkohlenstoff.

9. Verwendung der nach den Ansprüchen 1 bis 8 erhältlichen modifizierten feinteiligen, wasserunlöslichen, vernetzten Polymerisate zur Immobilisierung von Wirkstoffen, als Absorptionsmittel für Aldehyde, Ketone und Säuren sowie zur Entfernung von Schwermetallionen aus Abwässern.

## Claims

1. A modified, fine-particle, water-insoluble aziridine polymer which can be obtained by reacting a fine-particle, water-insoluble, crosslinked aziridine polymer, in aqueous medium, with carbon disulfide or with formaldehyde and a nucleophilic agent from the group consisting of alkali metal cyanides, primary amines, secondary amines, alkali metal sulfites and alkali metal phosphites.

2. A modified, fine-particle, water-insoluble polymer as claimed in claim 1, which can be obtained by carboxymethylating a fine-particle, water-insoluble, crosslinked polyethylenimine with formaldehyde and an alkali metal cyanide by means of a Strecker reaction.

3. A modified, fine-particle, water-insoluble, crosslinked polyethylenimine as claimed in claim 1 or 2, which can be obtained by carboxymethylating under reduced pressure and at the same time passing an inert gas through the reaction mixture.

4. A modified, fine-particle, water-insoluble, crosslinked polyethylenimine as claimed in claim 1 or 2, which can be obtained by carboxymethylating a fine-particle, water-insoluble, crosslinked polyethylenimine with formaldehyde and sodium cyanide at from 60 to 110°C and under pressures of from 0.1·10⁵ to 0.8·10⁵ Pa (100 to 800 mbar).

5. A modified, fine-particle, water-insoluble, crosslinked polyethylenimine as claimed in claim 1, which can be obtained by phosphonomethylating a fine-particle, water-insoluble, crosslinked polyethylenimine with formaldehyde and an alkali metal phosphite.

6. A modified, fine-particle, water-insoluble, crosslinked polyethylenimine as claimed in claim 1 or 2, which can be obtained by a Mannich reaction of fine-particle, water-insoluble, crosslinked polyethylenimines with formaldehyde and a primary and/or secondary amine.

7. A modified, fine-particle, water-insoluble, crosslinked polyethylenimine as claimed in claim 1, which can be obtained by reacting a fine-particle, water-insoluble, crosslinked polyethylenimine with formaldehyde and an alkali metal sulfite at from 60 to 110°C.

8. A modified, fine-particle, water-insoluble, crosslinked aziridine polymer as claimed in claim 1, which can be obtained by reacting a fine-particle, water-insoluble, crosslinked polyethylenimine with carbon disulfide at from 0 to 30°C.

9. The use of the modified fine-particle, water-insoluble, crosslinked polymers which can be obtained as claimed in claims 1 and 8 for immobilizing active compounds, as absorbents for aldehydes, ketones and acids, and for removing heavy metal ions from waste waters.

## Revendications

1. Polymères d'aziridines modifiés, finement divisés et insolubles dans l'eau, caractérisés en ce qu'ils peuvent être obtenus par réaction de polymères d'aziridines réticulés, finement divisés et insolubles dans l'eau, dans un milieu aqueux avec du sulfure de carbone ou avec du formaldéhyde et un agent nucléophile choisi dans le groupe formé par les cyanures de métaux alcalins, les amines primaires, les amines secondaires, les sulfites de métaux alcalins et les phosphites de métaux alcalins.

2. Polymères modifiés, finement divisés et insolubles dans l'eau selon la revendication 1, caractérisés en ce qu'ils peuvent être obtenus par carboxyméthylation de polyéthylène-imines réticulés, finement divisés et insolubles dans l'eau, avec du formaldéhyde et des cyanures d'alcali selon une réaction de Strecker.

3. Polyéthylène-imines modifiés, finement divisés et insolubles dans l'eau selon la revendication 1 ou 2, caractérisés en ce qu'ils peuvent être obtenus par carboxyméthylation sous pression réduite avec passage simultané d'un gaz inerte dans le mélange réactionnel.

4. Polyéthylène-imines modifiés, finement divisés et insolubles dans l'eau selon la revendication 1 ou 2, caractérisés en ce qu'ils peuvent être obtenus par carboxyméthylation de polyéthylène-imines réticulés, finement divisés et insolubles dans l'eau, avec du formaldéhyde et du cyanure de sodium à des températures de 60-110°C et sous des pressions de 0,1.10⁵ à 0,8.10⁵ Pa (100-800 mbar).

5. Polyéthylène-imines modifiés, finement divisés et insolubles dans l'eau selon la revendication 1, caractérisés en ce qu'ils peuvent être obtenus par phosphonométhylation de polyéthylène-imines réticulés, finement divisés et insolubles dans l'eau, avec du formaldéhyde et des phosphites de métaux alcalins.

6. Polyéthylène-imines modifiés, finement divisés et insolubles dans l'eau selon la revendication 1 ou 2, caractérisés en ce qu'ils peuvent être obtenus par une réaction de Mannich de polyéthylène-imines réticulés, finement divisés et insolubles dans l'eau, avec du formaldéhyde et des amines primaires et/ou secondaires.

7. Polyéthylène-imines modifiés, finement divisés et insolubles dans l'eau selon la revendication 1, caractérisés en ce qu'ils peuvent être obtenus par réaction de polyéthylène-imines réticulés, finement divisés et insolubles dans l'eau, avec du formaldéhyde et des sulfites de métaux alcalins à des températures de 60-110°C.

8. Polymères d'aziridines modifiés, finement divisés et insolubles dans l'eau selon la revendication 1, caractérisés en ce qu'ils peuvent être obtenus par réaction de polyéthylène-imines réticulés, finement divisés et insolubles dans l'eau, à des températures de 0-30°C, avec du sulfure de carbone.

9. Utilisation de polymères réticulés, finement divisés et insolubles dans l'eau pouvant être obtenus selon l'une quelconque des revendications 1 à 8, pour l'immobilisation de matières, en tant qu'agent absorbant pour les aldéhydes, les cétones et les acides ainsi que pour l'élimination d'ions de métaux lourds dans les eaux résiduaires.
